(19) Europäisches Patentamt
European Patent Office
Office européen des brevets

(11) EP 3 464 448 B1

(12) **FASCICULE DE BREVET EUROPEEN**

(45) Date de publication et mention de la délivrance du brevet:
**20.05.2020 Bulletin 2020/21**

(21) Numéro de dépôt: **17727142.6**

(22) Date de dépôt: **22.05.2017**

(51) Int Cl.:
***C08K 5/50*** *(2006.01)* ***C08J 3/20*** *(2006.01)*
***C08L 63/00*** *(2006.01)* ***C08G 59/40*** *(2006.01)*
***C08L 71/10*** *(2006.01)* ***C08K 3/22*** *(2006.01)*

(86) Numéro de dépôt international:
**PCT/EP2017/062273**

(87) Numéro de publication internationale:
**WO 2017/202771 (30.11.2017 Gazette 2017/48)**

# (54) MATÉRIAU COMPOSITE ÉPOXYDE / RENFORT POLYMÈRE ET SON PROCÉDÉ DE PRÉPARATION

VERBUNDSSTOFF AUS POLYMERVERSTÄRKTEM EPOXIDHARZ UND VERFAHREN ZU SEINER HERSTELLUNG

POLYMER-TOUGHENED EPOXY COMPOSITE MATERIAL AND ITS PREPARATION PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2016 FR 1654647**
**29.07.2016 FR 1657349**

(43) Date de publication de la demande:
**10.04.2019 Bulletin 2019/15**

(73) Titulaires:
- **Université Claude Bernard Lyon 1**
  **69100 Villeurbanne (FR)**
- **Université Jean Monnet Saint Etienne**
  **42100 Saint Etienne (FR)**
- **Centre National de la Recherche Scientifique**
  **75016 Paris (FR)**
- **Institut National des Sciences Appliquées de Lyon**
  **69621 Villeurbanne Cedex (FR)**

(72) Inventeur: **LIVI, Sébastien**
**69100 Villeurbanne (FR)**

(74) Mandataire: **Cabinet Becker et Associés**
**25, rue Louis le Grand**
**75002 Paris (FR)**

(56) Documents cités:
**WO-A1-2010/084939 WO-A1-2015/068786**
**WO-A1-2015/068787 US-A1- 2010 280 151**
**US-A1- 2015 252 184**

- **SILVA ADRIANA A ET AL: "New epoxy systems based on ionic liquid", POLYMER, ELSEVIER SCIENCE PUBLISHERS B.V, GB, vol. 54, no. 8, 16 février 2013 (2013-02-16), pages 2123-2129, XP028526765, ISSN: 0032-3861, DOI: 10.1016/J.POLYMER.2013.02.021 cité dans la demande**
- **HODGKIN J H ET AL: "THERMOPLASTIC TOUGHENING OF EPOXY RESINS: A CRITICAL REVIEW", POLYMERS FOR ADVANCED TECHNOLOGIES, WILEY & SONS, BOGNOR REGIS, GB, vol. 9, no. 1, 1 janvier 1998 (1998-01-01) , pages 3-10, XP000727924, ISSN: 1042-7147, DOI: 10.1002/(SICI)1099-1581(199801)9:1<3::AID-PAT727>3.3.CO;2-9 cité dans la demande**
- **Krzysztof Kowalczyk: "Ionic liquids as convenient latent hardeners of epoxy resins - Tom T. 48, nr 11-12 (2003) -", Polimery, 48, 1 janvier 2003 (2003-01-01), pages 833-835, XP055335143, Warsow Extrait de l'Internet: URL:http://yadda.icm.edu.pl/yadda/element/bwmeta1.element.baztech-article-BPL9-0007-0022 [extrait le 2017-01-13]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

**Description**

## DOMAINE DE L'INVENTION

La présente invention concerne le domaine technique des matériaux composites comprenant une matrice à base de polymère thermodurcissable dans laquelle sont dispersées des particules de polymère thermoplastique et/ou d'élastomère. Plus précisément, l'invention se rapporte à un nouveau type de matériau polymère obtenu en utilisant un liquide ionique particulier en tant qu'agent réticulant d'une résine époxyde mélangée à un polymère thermoplastique et/ou à un élastomère.

L'invention se rapporte également à un procédé de fabrication dudit matériau composite et à ses utilisations, notamment dans les domaines aéronautique, aérospatial, automobile, maritime, éolien, électronique ou encore dans le domaine du sport et des loisirs.

## ETAT ANTERIEUR DE LA TECHNIQUE

Les matériaux thermodurcissables présentent une structure tridimensionnelle formée par des liaisons chimiques résultant d'une réaction de polymérisation entre une résine thermodurcissable, généralement une résine époxyde, et un durcisseur qui peut être une amine, un anhydride d'acide, un phénol ou un isocyanate. Sous l'effet de la chaleur, c'est-à-dire par "cuisson", la réaction de la résine avec le durcisseur entraîne un phénomène de gélification puis de vitrification, conduisant à un matériau thermodurci qui est infusible et insoluble. Leurs propriétés mécaniques et leur résistance thermique et chimique ont permis aux résines thermodurcissables de trouver de nombreuses applications, notamment dans l'industrie aéronautique et automobile.

Un inconvénient des résines thermodurcissables est toutefois leur médiocre résistance aux chocs, qui les rend cassantes, et leur faible ténacité de rupture, qui facilite la propagation des fissures au sein du matériau. Pour remédier à cet inconvénient, il a déjà été envisagé de préparer des systèmes bi-composants thermodurcissable / thermoplastique. Pour ce faire, la solution la plus simple consiste à utiliser un polymère thermoplastique initialement miscible dans la résine thermodurcissable, qui lui sert ainsi de solvant. La polymérisation de la résine génère une baisse d'entropie qui entraîne une séparation de phases pour former soit une dispersion de nodules sphériques de polymère thermoplastique dans la matrice thermodurcie, soit des structures co-continues. Il est ainsi possible d'obtenir des composites hautes performances présentant à la fois une rigidité et une ténacité élevées.

Des composites de ce type sont notamment décrits dans Thermoplastic toughening of epoxy resins: A Critical Review, Polymersfor Advanced Technologies, 9(1)3-10 (1998) and Development and characterization of thermosetting-thermoplastic polymer blends for applications in damage tolerant composites, Polymer Physics, 26(1) 65-81 (1988) et ont été développés depuis. Ils sont obtenus par mélange d'un polymère thermoplastique avec un prépolymère époxyde en présence d'un agent réticulant de type amine (polyamine aliphatique ou aromatique).

Une autre solution pour améliorer la ténacité à la rupture des matériaux préparés à base de résine époxyde consiste à ajouter à la résine un élastomère, qui peut notamment se présenter sous forme de particules cœur-écorce (A. Maazouz et al., Polymer Bulletin 33: 67-74 (1994)), éventuellement formées *in situ* (US 2010/280151, US 2015/252184).

Il s'avère que, pour que la réticulation de la résine époxy soit effective, une quantité stoechiométrique (qui est importante) d'agent réticulant doit être mise en oeuvre. Or, certains de ces agents réticulants, en particulier les diamines aromatiques, se sont révélés être toxiques pour l'homme et l'environnement. Aussi, leur utilisation doit être limitée, notamment pour se conformer à la réglementation REACH.

En outre, ces agents réticulants ne conduisent pas toujours à des matériaux présentant une stabilité thermique, des propriétés barrières à l'eau et/ou aux solvants et une ténacité à la rupture suffisants pour certaines applications.

Le problème que se propose de résoudre l'invention est donc celui de mettre au point des matériaux composites époxyde / renfort polymère, présentant de meilleures propriétés que celles obtenues en utilisant les agents réticulants conventionnels et qui ne soient pas dangereux pour l'homme et l'environnement.

Les liquides ioniques sont des mélanges constitués uniquement d'ions, respectivement un cation organique et un anion pouvant être organique ou inorganique, formant un sel qui présente une température de fusion inférieure à 100°C et généralement inférieure à 25°C. Ils sont considérés comme moins nocifs pour l'environnement, car non volatils, que les solvants organiques classiques et utilisés de ce fait comme solvants de réactions organiques depuis les années 80.

Il a déjà été proposé d'utiliser des liquides ioniques comme agents durcisseurs de résines époxydes, éventuellement en mélange avec des polymères thermoplastiques, pour la fabrication de matériaux utilisés dans la fabrication de dispositifs d'affichage électroluminescents (WO 2010/084939, WO 2015/068786, WO 2015/068787). Ces matériaux présentent toutefois des propriétés barrières insuffisantes, qui nécessitent d'y ajouter des oxydes métalliques destinés à absorber l'humidité qu'ils renferment.

Il a en outre été suggéré d'utiliser un liquide ionique de type dialkylphosphinate de tétraalkylphosphonium comme agent durcisseur de prépolymère époxyde de type DGEBA (Livi et al., Polymer 54 (2013) 2123-2129). Le liquide ionique agit dans ce cas comme catalyseur d'homopolymérisation du DGEBA à température ambiante. Il permet d'obtenir un matériau présentant une stabilité thermique supérieure à celle obtenue à l'aide d'un agent réticulant de type diamine à squelette polyéther.

## RESUME DE L'INVENTION

De manière surprenante, le Demandeur a démontré que certains liquides ioniques pouvaient être utilisés comme agents réticulants de résines époxydes mélangées à des renforts polymères (polymères thermoplastiques et/ou élastomères) pour améliorer les propriétés, et en particulier la stabilité thermique, la ténacité à la rupture et les propriétés barrière et ignifuges, du matériau composite obtenu, par comparaison avec les agents réticulants classiques. Ces liquides ioniques présentent en outre l'avantage de jouer le double rôle d'agent réticulant de la résine époxyde et de solubilisant du polymère thermoplastique, lorsqu'il est présent. Ils permettent ainsi de préparer des matériaux composites sans utiliser de solvant organique. Ils constituent par ailleurs une classe de composés dits "verts", peu volatils et ininflammables, qui s'avèrent être efficaces comme agents réticulants à de plus faibles teneurs que les agents réticulants classiques. Pour toutes ces raisons, l'utilisation de liquides ioniques constitue un avantage indéniable du point de vue de l'impact environnemental du procédé qui les met en oeuvre.

L'invention concerne ainsi un matériau composite comprenant une dispersion de particules de polymère thermoplastique et/ou d'élastomère dans une matrice époxyde réticulée par au moins un liquide ionique qui est constitué d'un sel de dialkylphosphate ou de dialkylphosphinate d'un cation organique, où le groupe alkyl est linéaire ou ramifié et comprend indépendamment de 1 à 12 atomes de carbone.

Elle se rapporte également à l'utilisation de ce matériau pour la fabrication de pièces ou de revêtements utilisables dans les domaines aéronautique, aérospatial, automobile, maritime, éolien, électronique ou encore dans le domaine du sport et des loisirs, ainsi qu'à un procédé de fabrication de ce matériau composite comprenant les étapes suivantes :

a) on mélange (i) au moins un polymère thermoplastique, au moins un élastomère ou un polymère thermoplastique associé à un élastomère, (ii) une résine époxyde et (iii) un agent réticulant comprenant, de préférence constitué par, au moins un liquide ionique constitué d'un sel de dialkylphosphate ou de dialkylphosphinate d'un cation organique, où le groupe alkyl est linéaire ou ramifié et comprend indépendamment de 1 à 12 atomes de carbone;
b) on met en forme et durcit le mélange ainsi obtenu.

## DESCRIPTION DETAILLEE

Le matériau composite selon l'invention comprend une matrice époxyde réticulée par un liquide ionique, au sein de laquelle est dispersé le polymère thermoplastique, l'élastomère ou le polymère thermoplastique associé à l'élastomère, désignés indifféremment ci-dessous par "renfort polymère".

Dans un premier mode de réalisation de l'invention, le matériau composite renferme des particules de polymère thermoplastique.

Dans un second mode de réalisation de l'invention, le matériau composite comprend des nanoparticules d'élastomère.

Dans un troisième mode de réalisation, le matériau composite renferme des particules présentant une structure cœur-écorce. Dans une forme d'exécution préférée de l'invention, ces particules sont telles que le cœur comprend ou est constitué par un élastomère et l'écorce comprend ou est constituée par un polymère thermoplastique. En variante, toutefois, on peut utiliser dans la présente invention des particules cœur-écorce multicouches dont le cœur comprend ou est constitué par un polymère thermoplastique qui est recouvert d'une couche intermédiaire comprenant ou constituée par un élastomère, elle-même revêtue d'une écorce comprenant ou constituée par un polymère thermoplastique. On considère que, dans ces formes d'exécution, le matériau renferme un polymère thermoplastique associé à un élastomère.

Le matériau selon ces trois modes de réalisation peut être obtenu selon un procédé comprenant les étapes suivantes :

a) on mélange : (i) au moins un polymère thermoplastique, au moins un élastomère ou un polymère thermoplastique associé à un élastomère (ii) une résine époxyde et (iii) un agent réticulant comprenant, de préférence constitué par, au moins un liquide ionique qui est constitué d'un sel de dialkylphosphate ou de dialkylphosphinate d'un cation organique, où le groupe alkyl est linéaire ou ramifié et comprend indépendamment de 1 à 12 atomes de carbone ;
b) on met en forme et durcit le mélange ainsi obtenu.

En variante, le matériau selon le troisième mode de réalisation ci-dessus peut être obtenu selon un procédé comprenant les étapes suivantes :

a) on mélange : (i) une résine époxyde, (ii) un copolymère à blocs capable de former, après solubilisation dans la résine époxyde, une structure cœur-écorce et (iii) un agent réticulant de la résine époxyde comprenant, de préférence constitué par, au moins un liquide ionique qui est constitué d'un sel de dialkylphosphate ou de dialkylphosphinate d'un cation organique, où le groupe alkyl est linéaire ou ramifié et comprend indépendamment de 1 à 12 atomes de carbone.
b) on met en forme et durcit le mélange ainsi obtenu.

Les procédés ci-dessus sont avantageusement conduits en l'absence de solvant organique.
Des exemples de copolymères à blocs comprennent un copolymère tribloc A-B-A dont le bloc B constitue un polymère élastomère, tel que le poly(acrylate de butyle) ou un polysiloxane, et les blocs A constituent des polymères thermoplastiques, tels que le poly(méthacrylate de méthyle), un polyéther ou la polycaprolactone. Des exemples de tels copolymères à blocs sont notamment commercialisés par la société ARKEMA sous la dénomination commerciale Nanostrength®. Ces copolymères à blocs permettent d'obtenir *in situ* des particules ayant un diamètre moyen compris entre 10 et 100 nm, par exemple entre 20 et 70 nm. Ils peuvent être utilisés à hauteur de 3 à 10% en poids, par rapport au poids de résine époxyde, par exemple.
Dans le cadre de cette description, on entend par « résine époxyde » au moins un monomère époxyde et/ou au moins un prépolymère époxyde. On entend par « prépolymère époxyde » un oligomère ou polymère comprenant au moins deux fonctions époxy terminales, généralement obtenu par réaction d'épichlorhydrine avec un composé polyhydroxylé et qui, par réticulation, devient infusible et insoluble pour former une résine thermodurcie désignée ici par "matrice époxyde".
Avantageusement, la résine époxyde présente au moins deux et au plus quatre fonctions époxydes.
Dans un mode de réalisation particulier, la résine époxyde est un prépolymère époxyde qui est avantageusement choisi dans le groupe constitué des résines DGEBA (diglycidyl éther de bisphénol A), DGEBF (diglycidyl éther de 9,9-bis(4-hydroxyphényl)fluorène), DGEFX (diglycidyl éther de 3,6-dihydroxyspiro-[fluorène-9,9'-xanthane]), DGEA (diglycidyl éther de 10,10-bis(4-hydroxyphényl)anthrone) et TGETA (diglycidyl éther de 9,9,10,10-tetrakis(4-hydroxyphényl)anthracène). On préfère utiliser une résine DGEBA comme résine époxyde.
Le polymère thermoplastique peut être choisi parmi les polymères thermoplastiques amorphes ou semi-cristallins. Des exemples de tels polymères peuvent notamment être choisis dans le groupe constitué des poly(éther sulfones), polyéthylènimines, polyamides, polyamide-imides, poly(phénylène oxydes) éventuellement greffés méthacrylate (PPO-g-MA), et leurs mélanges. Les poly(phénylène oxydes) sont préférés pour une utilisation dans la présente invention.
La quantité de polymère thermoplastique mise en œuvre peut représenter de 0,5 à 60 parties en poids pour cent parties en poids de résine époxyde.
L'élastomère peut être choisi parmi les polysiloxanes, le poly(acrylate de butyle), le poly(styrène-co-butadiène), le poly(butadiène-co-acrylonitrile), le caoutchouc nitrile et d'une manière générale tous les élastomères non réactifs. Pour faciliter sa solubilisation dans la résine époxyde, il est possible d'ajouter un solvant au mélange ou de mettre au préalable la résine époxyde en solution dans un solvant. Dans le cas où on utilise un copolymère de butadiène et d'acrylonitrile, il est également possible d'augmenter le ratio acrylonitrile / butadiène et/ou la masse molaire de la résine époxyde pour améliorer la solubilisation de l'élastomère dans la résine époxyde.
On préfère toutefois selon cette invention que l'élastomère se trouve sous forme de nanoparticules ou qu'il soit inclus dans des particules de type cœur-écorce.
Dans le premier cas, l'utilisation de nanoparticules permet d'augmenter significativement la tension interfaciale entre les particules d'élastomère et la résine époxyde. Ces nanoparticules sont avantageusement utilisées sous forme de suspension colloïdale dans un solvant adéquat. Elles peuvent avoir un diamètre allant de 20 à 100 nm, par exemple. Les nanoparticules d'élastomère peuvent représenter de 0,5 à 60%, et en particulier de 5 à 20%, du poids de la résine époxyde, par exemple.
Dans le cas où on utilise une structure cœur-écorce, le cœur de cette structure comprend ou est constitué d'un élastomère qui peut être choisi parmi ceux cités précédemment et l'écorce comprend ou est constituée d'un polymère thermoplastique qui peut également être choisi parmi ceux cités précédemment. Ces particules peuvent ainsi par exemple être constituées d'un cœur en polysiloxane et d'une écorce en poly(méthacrylate d'alkyle), notamment en poy(méthacrylate de méthyle), ou en polystyrène. Des exemples de telles particules cœur-écorce sont notamment commercialisées par la scociété WACKER sous la dénomination commerciale Genioperl®. Ces particules peuvent notamment être préparées par polymérisation en émulsion. Elles peuvent présenter une taille de particule comprise entre 5 nm et 100 μm, de préférence entre 10 nm et 10 μm et plus préférentiellement entre 50 et 500 nm, par exemple entre 100 et 300 nm.
L'utilisation d'un élastomère sous forme de telles particules cœur-écorce n'affecte pas sensiblement la température de transition vitreuse du matériau composite et permet d'obtenir une taille de particule bien définie et une

fraction volumique d'élastomère qui est dispersée de manière homogène au sein de la matrice époxyde.

Pour améliorer la stabilité structurale de ces particules lors de leur mélange avec la résine époxyde, le cœur et/ou l'écorce, de préférence l'écorce, des particules cœur-écorce peut être réticulé(e), par exemple à l'aide de divinylbenzène. Pour ce faire, le monomère constituant l'écorce, par exemple le méthacrylate de méthyle, peut être copolymérisé avec au moins un monomère réticulable tel que le diméthacrylate d'éthylène glycol, le méthacrylate de glycidyle, l'acide méthacrylique et/ou l'acrylonitrile.

Les particules cœur-écorce peuvent représenter de 1 à 15% en poids, notamment de 2 à 12% en poids, par rapport au poids de résine époxyde, par exemple.

Comme déjà indiqué, un liquide ionique particulier est utilisé comme agent réticulant de la résine époxyde. Il comprend au moins un anion organique constitué d'un dialkylphosphate et/ou d'un dialkylphosphinate, où le groupe alkyl est linéaire ou ramifié et comprend indépendamment de 1 à 12 atomes de carbone, et au moins un cation organique, formant un sel ayant un point de fusion inférieur à 100°C, voire à 25°C. Sans vouloir être liés par cette théorie, il semble que l'anion du liquide ionique permettrait d'ouvrir l'époxyde dans le but de déclencher la polymérisation conduisant à la matrice époxyde et se retrouverait ensuite lié de manière covalente dans la matrice époxyde, tandis que le cation permettrait de stabiliser la composition en interagissant avec le polymère thermoplastique dispersé au sein de la matrice époxyde.

L'anion est avantageusement choisi dans le groupe constitué des anions dialkylphosphate et dialkylphosphinate, où le groupe alkyl est linéaire ou ramifié et comprend indépendamment de 2 à 8 atomes de carbone.

De son côté, le cation organique est avantageusement choisi dans le groupe constitué des cations tétraalkylphosphonium, N,N-dialkylimidazolium, N-alkylpyridinium, N-dialkylpipéridinium, N-dialkylpyrrolidinium, tétraalkylammonium, pyrazolium, N-alkylthiazolium, trialkylsulfonium, trialkyltriazolium, ainsi que leurs mélanges. On préfère utiliser les liquides ioniques formés d'un cation tétraalkylphosphonium dont les groupes alkyle sont avantageusement linéaires et renferment indépendamment de 1 à 18 et de préférence de 4 à 14 atomes de carbone.

Un ou plusieurs des liquides ioniques précités peuvent être utilisés dans la présente invention. Dans le contexte de cette description, l'expression "le liquide ionique" sera donc comprise comme incluant aussi bien un seul liquide ionique que plusieurs des liquides ioniques précités. Par ailleurs, ce liquide ionique peut éventuellement être combiné, dans la mise en oeuvre de la présente invention, à au moins un autre liquide ionique choisi par exemple parmi les sels formés d'anions dicyanamide $[N(CN)_2]^-$, bis(trifluorométhylsulfonyl)imide $[NTf2]^-$, bis(trifluorométhane)sulfonimide [TFSI], alkylcarboxylate, hexafluorophosphate $[PF_6]^-$, sulfonate, alkylsulfate, tétrafluoroborate $[BF_4]$ , trifluorométhanesulfonate $[CF_3SO_3]^-$, $[C_4F_9SO_3]^-$, $[CF_3CO_2]^-$, $[(CF_3SO_2)_3C]^-$, $[(CF_3SO_2)_2N]^-$, nitrate $[NO_3]^-$, $[ClO_4]^-$, $F^-$, $Br^-$, $Cl^-$, $I^-$, $[Al_2Cl_7]^-$, chloroaluminate $[AlCl_4]^-$ , $[CuCl_2]$, $[AuCl_4]^-$, $[ZnCl_3]^-$, $[SnCl_3]^-$, ainsi que leurs mélanges.

Selon un mode de réalisation préférentiel, le liquide ionique est choisi dans le groupe constitué des sels suivants :

IL-TMP : Bis-2,4,4-(triméthylpentyl)phosphinate de trihexyl(tétradécyl)phosphonium

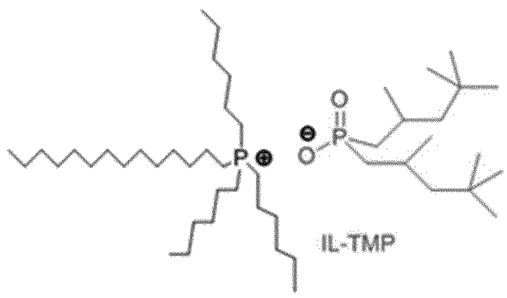

IL-DEP : Diéthylphosphate de tributyl(éthyl)phosphonium

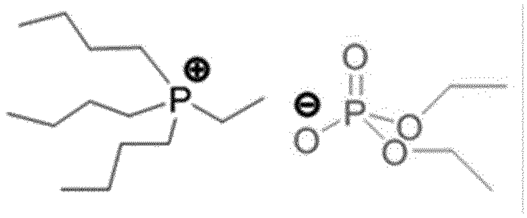

IL-DCA : Dicyanamide de trihexyl(tétradécyl)phosphonium

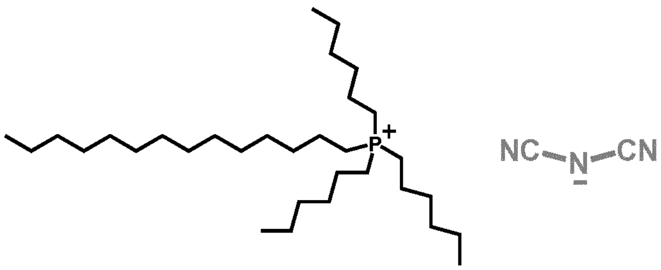

IL-EHP : Bis(2-éthylhexyl)phosphate de trihexyl(tétradécyl)phosphonium

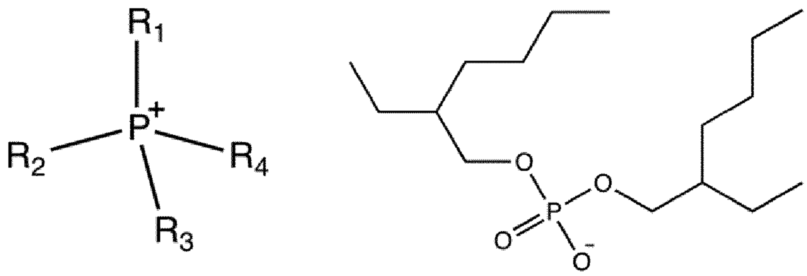

où $R_1$, $R_2$, $R_3$ = hexyl et $R_4$ = tétradécyl

Des liquides ioniques de ce type sont notamment disponibles auprès de la société CYTEC sous la dénomination commerciale Cyphos® IL 104, Cyphos® IL 169 et Cyphos® IL 105.

Avantageusement, le liquide ionique est choisi dans le groupe constitué du diéthylphosphate de tributyl(éthyl)phosphonium (IL-DEP), du bis-2,4,4-(triméthylpentyl)phosphinate de trihexyl(tétradécyl)phosphonium (IL-TMP) et de leurs mélanges. Plus préférentiellement, il est constitué du diéthylphosphate de tributyl (éthyl)phosphonium.

Le liquide ionique peut représenter de 5 à 50 parties en poids pour cent parties en poids de résine époxyde.

Dans un mode de réalisation avantageux, le liquide ionique est présent en excès molaire par rapport à la résine époxyde. Le Demandeur a en effet constaté que l'excès de liquide ionique pouvait conférer au matériau un caractère auto-cicatrisant ou auto-réparant. Plus précisément, l'excès de liquide ionique permettrait d'éviter la formation de fissures et/ou de craquements du matériau après usinage en déclenchant des mécanismes physico-chimiques de restauration des propriétés du matériau.

Selon l'invention, on mélange la résine époxyde avec le polymère thermoplastique, dans des conditions de température et éventuellement d'agitation et pendant une durée suffisantes pour solubiliser le polymère thermoplastique dans la résine époxyde, par exemple à une température comprise entre 100 et 200 °C, avantageusement comprise entre 120 et 160°C et pendant une durée allant par exemple de 30 minutes à deux heures.

Bien que cela ne soit généralement pas nécessaire, il est possible de mélanger la résine époxyde et le polymère thermoplastique en présence d'un solvant, qui pourra être évaporé ultérieurement, au cours du procédé de fabrication du matériau composite décrit ci-après. Le liquide ionique peut être ajouté à la résine époxyde avant, simultanément à ou après l'ajout du polymère thermoplastique.

Selon une forme d'exécution préférée de l'invention, le liquide ionique est introduit dans le mélange constitué du polymère thermoplastique dissous dans la résine époxyde. Ainsi, l'étape a) du procédé selon l'invention se décompose en deux étapes a1) et a2) comme suit :

a1) on solubilise ledit polymère thermoplastique dans ledit monomère époxyde et/ou ledit prépolymère époxyde ; et
a2) on ajoute au mélange ainsi formé l'agent réticulant comprenant, de préférence constitué par, ledit liquide ionique.

Dans ce cas, l'ajout du liquide ionique se fait généralement dans les mêmes conditions de température, voire à des températures inférieures, par exemple comprises entre 80 et 160°C, et de préférence sous agitation.

Dans le cas où on utilise un élastomère comme renfort polymère, ce dernier est généralement mélangé à la résine époxyde à une température comprise entre 40 et 120°C, par exemple de 40 à 80°C, éventuellement sous agitation voire à l'aide d'ultrasons.

Dans tous les cas, le mélange est alors mis en forme avant qu'il ne gélifie, selon toute technique appropriée connue de l'homme du métier, notamment par coulée, par projection, par trempage, par compression, par infusion, par injection de résine liquide (procédé dit RTM), par imprégnation par voie humide, par stéréolithographie, par fabrication

additive (dépôt de poudre) ou par moulage au contact, par exemple.

Simultanément à la mise en forme du mélange, ou après celle-ci, on procède à une étape de cuisson destinée à obtenir un matériau vitrifié. Cette étape peut impliquer plusieurs paliers de température successifs, par exemple un premier palier à 60-90°C pendant une à trois heures, suivi d'un second palier à 100-180°C pendant deux à quatre heures. Elle peut être suivie d'une étape de post-cuisson, généralement à une température supérieure à la température maximale de transition vitreuse que le matériau peut atteindre, par exemple à 180-220°C. Dans tous les cas, on préfère que le matériau obtenu soit ensuite refroidi lentement pour éviter le développement de fissures.

Selon les besoins, il est possible d'ajouter un ou plusieurs additifs au mélange de la résine époxyde et du renfort polymère, avant ou après ajout du liquide ionique. Ces additifs peuvent notamment être choisis parmi : les charges et en particulier les charges de renfort, les charges opacifiantes et les charges conductrices, par exemple les nanotubes de carbone, les fibres de carbone, le noir de carbone, les fibres de verre, la silice, le titane ou les argiles ; les retardateurs de flamme ; les agents anti-UV ; les stabilisants thermiques ; les pigments et/ou colorants ; les agents bactéricides ; les catalyseurs ; et leurs mélanges. En variante ou en plus, il est possible de préparer un matériau composite renforcé au cours de l'étape de mise en forme, en enduisant un renfort fibreux du mélange de la résine époxyde, du renfort polymère et du liquide ionique.

A l'issue de ce procédé on obtient une pièce ou un revêtement qui peut être utilisé par exemple dans les domaines aéronautique, aérospatial, automobile (pièces de carrosserie, peintures...), maritime, éolien (pales), électronique (encapsulation de composants électroniques...) ou encore dans le domaine du sport et des loisirs (raquettes de tennis, skis, vélos, planches de surf...).

L'invention et les avantages qui en découlent ressortiront mieux des exemples de réalisation suivants.

**EXEMPLES**

1/ Composés de base

On prépare différents matériaux polymériques à partir des produits suivants :

Aminé : 4,4'-méthylène bis(3-chloro-2,6-diéthylaniline) ou MCDEA correspondant au composé de formule suivante :

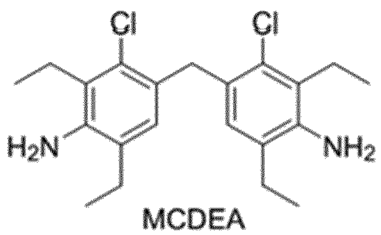

fourni par LONZACURE.

Résine époxy : résine DGEBA DER 332 correspondant au composé de formule suivante :

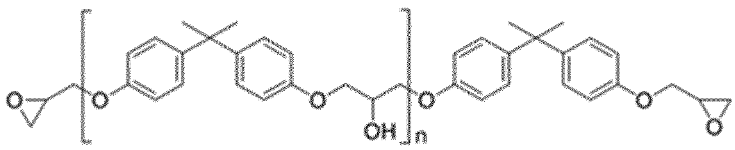

où n est tel que la masse molaire de la résine est d'environ 350 g/mol (masse en équivalent époxyde de 175 g/mol), commercialisée par DOW Chemical Company.

Polymère thermoplastique :

PPO correspond au poly(p-phénylène oxyde) de formule :

où n 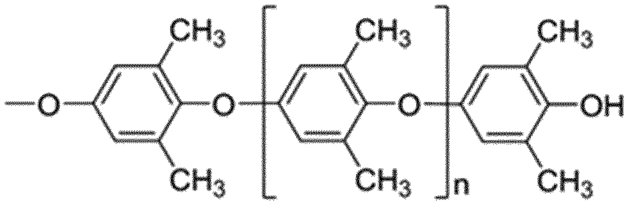 32.000 g/mol

Particules cœur-écorce :

Particules à cœur siliconé et écorce à base de poly(méthacrylate de méthyle), commercialiées par WACKER Chemie AG sous la référence commerciale Genioperl® P52, désignées ci-après par « CSR ».

Liquide ionique :

Bis-2,4,4-(triméthyl pentyl) phosphinate de trihexyl (tétradécyl) phosphonium (IL-TMP) correspondant au liquide ionique de formule suivante :

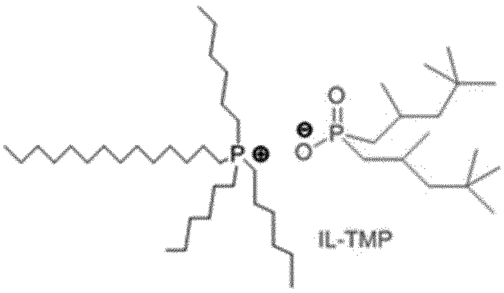

IL-TMP

Diéthyl phosphate de tributyl (éthyl) phosphonium (IL-DEP) correspondant au liquide ionique de formule suivante :

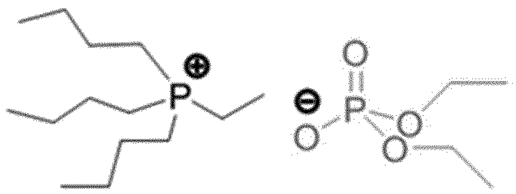

2/ Formulations :

Plusieurs exemples de matériaux selon l'invention ont été réalisés et comparés à des contre-exemples. Le tableau 1 regroupe ces différents modes de réalisation.

Tableau 1

| Exemples | Amine | Résine époxyde | Renfort polymère | Liquide ionique |
|---|---|---|---|---|
| CE-1 | MCDEA | DGEBA | PPO | - |
| CE-2 | MCDEA | DGEBA | PPE-g-MA | - |
| CE-3 | MCDEA | DGEBA | CSR | - |
| CE-4 | MCDEA | DGEBA | - | - |
| CE-5 | - | DGEBA | - | IL-TMP |
| INV-1 | - | DGEBA | PPO | IL-TMP |
| INV-2 | - | DGEBA | PPE-g-MA | IL-TMP |

(suite)

| Exemples | Amine | Résine époxyde | Renfort polymère | Liquide ionique |
|---|---|---|---|---|
| INV-3 | - | DGEBA | PPO | IL-DEP |
| INV-4 | - | DGEBA | PPE-g-MA | IL-DEP |
| INV-5 | - | DGEBA | CSR | IL-TMP |

3/ Fabrication

Pour préparer les mélanges résine époxyde / polymère thermoplastique, le prépolymère époxyde de type DGEBA a été chauffé à 150°C ou 130°C, puis mélangé avec le poly(phénylène oxyde) (PPO) ou le poly(phénylène oxyde) greffé anhydride maléique (PPO-g-MA), respectivement, pendant une heure, pour obtenir un mélange miscible. L'agent réticulant (MCDEA dans un rapport stoechiométrique ou IL-TMP à 10 phr ou IL-DEP à 10 phr) a alors été ajouté et mélangé mécaniquement quelques minutes avant que le mélange ne soit versé dans des moules en silicone. Les moules ont été chauffés à 90°C pendant environ 2 heures. Le protocole de cuisson comprenait un palier à 80°C pendant 2 heures, puis à 120°C pendant 3 heures pour les réseaux durcis par IL-TMP, un palier à 80°C pendant 2 heures puis à 160°C pendant 3 heures pour les réseaux durcis par IL-DEP et un palier à 150°C pendant 1 heure puis à 180°C pendant 2 heures pour les réseaux durcis par la MCDEA. Une étape de post-cuisson à 200°C a également été appliquée aux trois réseaux obtenus afin d'achever la réaction de réticulation (1 heure pour ceux durcis avec la MCDEA et IL-TMP et 3 heures pour ceux durcis avec IL-DEP).

Pour préparer les échantillons à base de résine époxyde et d'élastomère, les particules cœur-écorce ont été dispersées dans la résine DGEBA à 60°C pendant une heure, avec une vitesse d'agitation de 200 tours/min. Le mélange a ensuite été passé aux ultrasons (60 mW) pendant 15 minutes afin de disperser totalement les particules dans la résine. Un ratio stœchiométrique de MCDEA et 10 phr de IL-TMP ont ensuite été ajoutés et l'ensemble a été mélangé pour obtenir un mélange homogène qui a été versé dans des moules en silicone et durci dans un four. Le protocole de cuisson comprenait un palier à 150°C pendant 1 heure, puis à 180°C pendant 2 heures pour les réseaux durcis par MCDEA et un palier à 80°C pendant 2 heures puis à 120°C pendant 3 heures pour les réseaux durcis par IL-TMP. Une étape de post-cuisson à 200°C pendant 1 heure a également été appliquée aux deux réseaux obtenus afin d'achever la réaction de réticulation.

4/ Stabilité thermique

Les températures de dégradation de chacun des échantillons ont été mesurées par analyse thermogravimétrique (ATG), en utilisant un analyseur thermogravimétrique Q500 (TA instruments) avec une montée en température de 30 à 700 °C et une vitesse de chauffe de 20 $K.min^{-1}$ sous azote.

Les résultats sont présentés dans le Tableau 2 :

Tableau 2

| Exemples | $T_{d5\%}$ (°C) | $T_{d10\%}$ (°C) | $T_{dmax}$ (°C) |
|---|---|---|---|
| CE-1 | 390 | 399 | 418 |
| CE-2 | 392 | 400 | 418 |
| INV-1 | 404 | 422 | 457 |
| INV-2 | 405 | 420 | 450 |
| CE-3 | 383 | 396 | 418 |
| INV-5 | 412 | 428 | 453 |

$T_{d5\%}$ (°C) représente la température à laquelle on constate une perte de 5% de la masse de l'échantillon relativement à sa masse initiale.

$T_{d10\%}$ (°C) représente la température à laquelle on constate une perte de 10% de la masse de l'échantillon relativement à sa masse initiale.

$T_{dmax}$ (°C) représente la température à laquelle on constate une perte maximale de la masse de l'échantillon relativement à sa masse initiale.

Les résultats du tableau montrent que remplacer une amine par un liquide ionique comme agent réticulant au sein des échantillons permet d'améliorer significativement la stabilité thermique.

En effet, pour les échantillons INV-1 et INV-2, les résultats montrent clairement une stabilité thermique plus élevée par rapport aux échantillons CE-1 et CE-2. Il en est de même pour l'échantillon INV-5 comparativement au témoin CE-3. La température de dégradation est améliorée d'une valeur d'au moins 30°C voire de l'ordre de 40 °C.

5/ Pouvoir ignifuge

On a chauffé les échantillons de matériaux selon l'invention et de matériaux comparatifs à une température de 700°C sous azote. On a ensuite mesuré le pourcentage massique de chacun des échantillons, après dégradation, établi par rapport à la masse totale de l'échantillon avant dégradation, désigné dans le tableau ci-dessous par "résidu".

Les résultats obtenus sont rassemblés dans le Tableau 3 :

Tableau 3

| Exemples | Résidu (%) |
|---|---|
| CE-1 | 9,9 |
| CE-2 | 11,2 |
| INV-1 | 12,6 |
| INV-2 | 12,6 |
| INV-3 | 21,4 |
| INV-4 | 20,2 |

Ces résultats montrent que le résidu est légèrement plus important en présence du liquide ionique comme agent réticulant, ce qui traduit un meilleur pouvoir ignifuge des matériaux selon l'invention.

6/ Propriétés barrière à l'eau et aux solvants

Les résultats sont présentés dans le Tableau 4 :

Tableau 4

| Exemples | $\theta_{eau}$ (°) | $\theta_{CH2I2}$ (°) | $\gamma_{non\ dispersive}$ (mJ/m$^2$) | $\gamma_{dispersive}$ (mJ/m$^2$) | $\gamma_{totale}$ (mJ/m$^2$) |
|---|---|---|---|---|---|
| CE-1 | 89 | 52 | 1,5 | 31,0 | 32,5 |
| CE-2 | 90 | 51 | 1,1 | 32,5 | 33,6 |
| INV-1 | 101 | 79 | 1,6 | 16,4 | 18,0 |
| INV-2 | 105 | 71 | 0,2 | 22,3 | 22,5 |
| INV-3 | 99 | 73 | 1,3 | 19,6 | 20,9 |
| INV-4 | 100 | 71 | 1,0 | 21,2 | 22,2 |
| CE-3 | 80 | 48 | 4,5 | 31,1 | 35,6 |
| INV-5 | 101 | 70 | 0,5 | 22,4 | 22,9 |
| CH212 : diiodométhane<br>θ : angle de contact exprimé en degré (°). | | | | | |

Les grandeurs $\theta_{eau}$ et $\theta_{CH212}$ représentent respectivement :

- la valeur de l'angle de contact d'une goutte d'eau sur les échantillons CE-1, CE-2 et INV-1 à INV-4.
- la valeur de l'angle de contact d'une goutte de $CH_2I_2$ sur les échantillons CE-1, CE-2 et INV-1 à INV-4.

Les grandeurs $\gamma_{non\ dispersive}$, $\gamma_{dispeisive}$ et $\gamma_{totale}$ représentent respectivement :

- la tension de surface de la phase non dispersive à savoir la phase polaire ;
- la tension de surface de la phase dispersive à savoir la phase apolaire ;
- la somme des tensions de surface des phases dispersive et non dispersive.

Les tensions de surface ont été obtenues par la méthode de la goutte pendante, en utilisant un goniomètre Dataphysics et en déposant des gouttes d'eau et de diiodométhane sur le matériau à tester. Les composants non-dispersif et dispersif de l'énergie de surface ont été calculés en utilisant la théorie de Owens-Wendt.

Les résultats du Tableau 4 montrent que les échantillons selon l'invention, INV-1 à INV-4, présentent une valeur d'angle de contact nettement supérieure à celle des échantillons CE-1 et CE-2, représentatifs de l'état de l'art. On observe une augmentation d'environ 10° pour l'eau et entre 20 et 30° pour le diiodométhane. De même, l'échantillon INV-5 présente une amélioration de l'angle de contact de 20° pour l'eau et le diiodométhane, par rapport au témoin (CE-3).

Les échantillons INV-1 à INV-4 présentent en outre des valeurs d'énergie de surface totale inférieures à celles des échantillons CE-1 et CE-2, prouvant ainsi leurs meilleures propriétés hydrophobes et donc leur moindre perméabilité aux fluides, notamment à l'eau et aux solvants organiques. Il en est de même pour l'échantillon INV-5 comparativement au témoin CE-3.

7/ Tenue mécanique

Les propriétés de tenue mécanique ont été mesurées en évaluant la ténacité à la rupture (Kic) d'éprouvettes compactes de matériaux selon l'invention et de matériaux comparatifs, conformément à la norme ISO 13586. Le test de ténacité à la rupture a été effectué à l'aide d'un instrument de traction MTS en mode traction, à une vitesse de 10 mm.min$^{-1}$. La ténacité à la rupture a été calculée en utilisant l'équation suivante :

$$K_{Ic} = f(a/\mathrm{w})\frac{F_Q}{h\sqrt{\mathrm{w}}}$$

où $F_Q$(N) est la charge appliquée au début de la propagation de la fissure, a(m) est la longueur de la fissure, w(m) est la largeur de l'éprouvette, h(m) est l'épaisseur de l'éprouvette et f(a/w) est le facteur d'étalonnage lié à la géométrie de l'éprouvette :

$$f(a/\mathrm{w}) = \frac{(2+a)}{(1-a)^{3/2}}\left(0.886 + 4.64a - 13.32a^2 + 14.72a^3 - 5.6a^4\right)$$

La grandeur $K_{IC}$ est exprimée en MPa.m$^{1/2}$ et est mesurée pour chacun des échantillons.

Les résultats sont présentés dans le Tableau 5 :

Tableau 5

| Exemples | $K_{IC}$ (MPa.m$^{1/2°}$) |
|---|---|
| CE-1 | 0.69 ± 0.02 |
| CE-2 | 0.64 ± 0.03 |
| INV-3 | 1.67 ± 0.11 |
| INV-4 | 1.56 ± 0.04 |

Les matériaux selon l'invention, INV-3 et INV-4, présentent une meilleure tenue mécanique par rapport aux contre-exemples (CE-1 et CE-2), qui se traduit par une augmentation de 140% de la ténacité à la rupture du matériau.

8/ Propriétés thermomécaniques

Les propriétés thermomécaniques de l'échantillon INV-5 ont été mesurées à l'aide d'un dispositif d'analyse de solides Rheometrics RSAII à 0,05% de contrainte en traction, avec une fréquence de 1 Hz et une vitesse de chauffe de 3 K/min, pour une plage de températures de -130°C à 200°C.

Les températures de relaxation obtenues sont présentées dans le Tableau 6 ci-dessous.

Tableau 6

| Echantillon | CSR (phr) | Réticulant | Tα cœur (°C) | Tα matrice (°C) |
|---|---|---|---|---|
| CE-3 | 10 | MCDEA | -119 | 172 |
| CE-4 | 0 | MCDEA | - | 178 |
| CE-5 | 0 | IL-TMP | - | 150 |
| INV-5 | 10 | IL-TMP | -116 | 149 |

De ce tableau, il ressort qu'on observe deux pics de relaxation, dont le premier correspond au cœur en silicone et le second correspond à la matrice époxyde et se confond avec le pic de relaxation de l'écorce en PMMA. L'ajout des particules coeur-écorce ne modifie pas sensiblement la température de relaxation de la matrice époxyde, quel que soit l'agent réticulant utilisé.

**Revendications**

1. Matériau composite comprenant une dispersion de particules de polymère thermoplastique et/ou d'élastomère dans une matrice époxyde réticulée par au moins un liquide ionique qui est constitué d'un sel de dialkylphosphate ou de dialkylphosphinate d'un cation organique, où le groupe alkyl est linéaire ou ramifié et comprend indépendamment de 1 à 12 atomes de carbone.

2. Matériau selon la revendication 1, **caractérisé en ce qu'**il renferme des particules de polymère thermoplastique.

3. Matériau selon la revendication 1, **caractérisé en ce que** les particules présentent une structure cœur-écorce dont le cœur comprend ou est constitué par un élastomère et dont l'écorce comprend ou est constituée par un polymère thermoplastique.

4. Matériau selon la revendication 1, **caractérisé en ce qu'**il renferme des nanoparticules d'élastomère.

5. Matériau selon l'une des revendications 1 à 4, **caractérisé en ce qu'**il est susceptible d'être obtenu par un procédé comprenant les étapes suivantes :

   a) on mélange : (i) au moins un polymère thermoplastique, au moins un élastomère ou un polymère thermoplastique associé à un élastomère (ii) une résine époxyde et (iii) un agent réticulant comprenant, de préférence constitué par, au moins un liquide ionique constitué d'un sel de dialkylphosphate ou de dialkylphosphinate d'un cation organique, où le groupe alkyl est linéaire ou ramifié et comprend indépendamment de 1 à 12 atomes de carbone;
   b) on met en forme et durcit le mélange ainsi obtenu.

6. Matériau selon la revendication 3, **caractérisé en ce qu'**il est susceptible d'être obtenu par un procédé comprenant les étapes suivantes :

   a) on mélange : (i) une résine époxyde, (ii) un copolymère à blocs capable de former, après solubilisation dans la résine époxyde, une structure cœur-écorce et (iii) un agent réticulant de la résine époxyde comprenant, de préférence constitué par, au moins un liquide ionique constitué d'un sel de dialkylphosphate ou de dialkylphosphinate d'un cation organique, où le groupe alkyl est linéaire ou ramifié et comprend indépendamment de 1 à 12 atomes de carbone.
   b) on met en forme et durcit le mélange ainsi obtenu.

7. Matériau selon l'une des revendications 1 à 6, **caractérisé en ce que** la résine époxyde est le diglycidyl éther de bisphénol A (DGEBA).

8. Matériau selon l'une des revendications 1 à 3, 5 ou 7, **caractérisé en ce que** le polymère thermoplastique est choisi dans le groupe constitué des poly(éther sulfones), polyéthylènimines, polyamides, polyamide-imides, poly(phénylène oxydes) éventuellement greffés méthacrylate (PPO-g-MA) et leurs mélanges, de préférence des poly(phénylène

oxydes).

9. Matériau selon l'une des revendications 1 à 8, **caractérisé en ce que** le cation formant le liquide ionique est choisi dans le groupe constitué des cations tétraalkylphosphonium, N,N-dialkylimidazolium, N-alkylpyridinium, N-dialkylpipéridinium, N-dialkylpyrrolidinium, tétraalkylammonium, pyrazolium, N-alkylthiazolium, trialkylsulfonium, trialkyltriazolium, ainsi que leurs mélanges, de préférence des cations tétraalkylphosphonium dont les groupes alkyle sont avantageusement linéaires et renferment indépendamment de 1 à 18 et de préférence de 4 à 14 atomes de carbone.

10. Matériau selon l'une des revendications 1 à 9, **caractérisé en ce que** l'anion formant le liquide ionique est choisi dans le groupe constitué des anions dialkylphosphate, dialkylphosphinate, et leurs mélanges, où le groupe alkyl est linéaire ou ramifié et comprend indépendamment de 2 à 8 atomes de carbone.

11. Matériau selon l'une des revendications 1 à 10, **caractérisé en ce que** le liquide ionique est choisi dans le groupe constitué du diéthylphosphate de tributyl(éthyl)phosphonium (IL-DEP), du bis-2,4,4-(triméthylpentyl)phosphinate de trihexyl(tétradécyl)phosphonium (IL-TMP) et de leurs mélanges, préférentiellement du diéthylphosphate de tributyl(éthyl)phosphonium.

12. Utilisation du matériau selon l'une des revendications 1 à 11 pour la fabrication de pièces ou de revêtements utilisables dans les domaines aéronautique, aérospatial, automobile, maritime, éolien, électronique ou encore dans le domaine du sport et des loisirs.

13. Procédé de fabrication du matériau composite selon l'une des revendications 1 à 11, comprenant les étapes suivantes :

    a) on mélange (i) au moins un polymère thermoplastique, au moins un élastomère ou un polymère thermoplastique associé à un élastomère, (ii) une résine époxyde et (iii) un agent réticulant comprenant, de préférence constitué par, au moins un liquide ionique constitué d'un sel de dialkylphosphate ou de dialkylphosphinate d'un cation organique, où le groupe alkyl est linéaire ou ramifié et comprend indépendamment de 1 à 12 atomes de carbone ;
    b) on met en forme et durcit le mélange ainsi obtenu.

## Patentansprüche

1. Verbundstoff umfassend eine Dispersion thermoplastischer Polymerpartikel und/oder Elastomerpartikel in einer Epoxidmatrix, die mit wenigstens einer ionischen Flüssigkeit vernetzt ist, die aus einem Dialkylphosphat- oder Dialkylphosphinatsalz eines organischen Kations besteht, wo die Alkylgruppe linear oder verzweigt ist und unabhängig voneinander 1 bis 12 Kohlenstoffatome umfasst.

2. Stoff gemäß Anspruch 1, **dadurch gekennzeichnet, dass** er thermoplastische Polymerpartikel umfasst.

3. Stoff gemäß Anspruch 1, **dadurch gekennzeichnet, dass** die Partikel eine Kern-Schale-Struktur aufweisen, deren Kern ein Elastomer umfasst oder daraus besteht und deren Schale ein thermoplastisches Polymer umfasst oder daraus besteht.

4. Stoff gemäß Anspruch 1, **dadurch gekennzeichnet, dass** er Elastomer-Nanopartikel umfasst.

5. Stoff gemäß einem der Ansprüche 1 bis 4, **dadurch gekennzeichnet, dass** er mit einem Verfahren erhalten werden kann, umfassend die folgenden Schritte:

    a) Mischen: (i) wenigstens eines thermoplastischen Polymers, wenigstens eines Elastomers oder eines thermoplastischen Polymers, das mit einem Elastomer assoziiert ist, (ii) eines Epoxidharzes und (iii) eines Vernetzungsmittels umfassend, vorzugsweise bestehend aus wenigstens eine/r ionische/n Flüssigkeit, die aus einem Dialkylphosphat- oder Dialkylphosphinatsalz eines organischen Kations besteht, wo die Alkylgruppe linear oder verzweigt ist und unabhängig voneinander 1 bis 12 Kohlenstoffatome umfasst;
    b) Formen und Härten der folglich erhaltenen Mischung.

6. Stoff gemäß Anspruch 3, **dadurch gekennzeichnet, dass** er mit einem Verfahren erhalten werden kann, umfassend

die folgenden Schritte:

a) Mischen: (i) eines Epoxidharzes, (ii) eines Blockcopolymers, das in der Lage ist, nach Solubilisierung in einem Epoxidharz eine Schale-Kern-Struktur zu bilden, und (iii) eines Vernetzungsmittels des Epoxidharzes umfassend, vorzugsweise bestehend aus wenigstens eine/r ionische/n Flüssigkeit, die aus einem Dialkylphosphat- oder Dialkylphosphinatsalz eines organischen Kations besteht, wo die Alkylgruppe linear oder verzweigt ist und unabhängig voneinander 1 bis 12 Kohlenstoffatome umfasst;
b) Formen und Härten der folglich erhaltenen Mischung.

7. Stoff gemäß einem der Ansprüche 1 bis 6, **dadurch gekennzeichnet, dass** das Epoxidharz der Diglycidylether von Bisphenol A (DGEBA) ist.

8. Stoff gemäß einem der Ansprüche 1 bis 3, 5 oder 7, **dadurch gekennzeichnet, dass** das thermoplastische Polymer aus der Gruppe ausgewählt ist, bestehend aus Poly(ethersulfonen), Polyethyleniminen, Polyamiden, Polyamidimiden, Poly(phenylenoxiden), gegebenenfalls gepfropft mit Methacrylat (PPO-g-MA), und Gemischen davon, vorzugsweise Poly(phenylenoxiden).

9. Stoff gemäß einem der Ansprüche 1 bis 8, **dadurch gekennzeichnet, dass** das Kation, das die ionische Flüssigkeit bildet, aus der Gruppe ausgewählt ist, bestehend aus Tetraalkylphosphonium-, N,N-Dialkylimidazolium-, N-Alkylpyridinium-, N-Dialkylpiperidinium-, N-Dialkylpyrrolidinium-, Tetraalkylammonium-, Pyrazolinium-, N-Alkylthiazolinium-, Trialkylsulfonium-, Trialkyltriazolium-Kationen sowie Gemischen davon, vorzugsweise Tetraalkylphosphonium-Kationen, deren Alkylgruppen vorteilhafterweise linear sind und unabhängig voneinander 1 bis 18, vorzugsweise 4 bis 14 Kohlenstoffatome umfassen.

10. Stoff gemäß einem der Ansprüche 1 bis 9, **dadurch gekennzeichnet, dass** das Anion, das die ionische Flüssigkeit bildet, aus der Gruppe ausgewählt ist, bestehend aus Dialkylphosphat-, Dialkylphosphinat-Anionen und Gemischen davon, wo die Alkylgruppe linear oder verzweigt ist und unabhängig voneinander 2 bis 8 Kohlenstoffatome umfasst.

11. Stoff gemäß einem der Ansprüche 1 bis 10, **dadurch gekennzeichnet, dass** die ionische Flüssigkeit aus der Gruppe ausgewählt ist, bestehend aus Tributyl(ethyl)phosphoniumdiethylphosphat (IL-DEP), Trihexyl(tetradecyl)phosphonium-bis-2,4,4-(trimethylpentyl)phosphinat (IL-TMP) und Gemischen davon, vorzugsweise Tributyl(ethyl)phosphoniumdiethylphosphat.

12. Verwendung des Stoffs gemäß einem der Ansprüche 1 bis 11 zur Herstellung von Teilen oder Beschichtungen, die in den Bereichen Flugzeugbau, Luft- und Raumfahrt, Automobilbau, Schifffahrt, Windkraft, Elektronik oder auch in den Bereichen Sport und Freizeit verwendet werden können.

13. Verfahren zur Herstellung des Verbundstoffs gemäß einem der Ansprüche 1 bis 11, umfassend die folgenden Schritte:

a) Mischen: (i) wenigstens eines thermoplastischen Polymers, wenigstens eines Elastomers oder eines thermoplastischen Polymers, das mit einem Elastomer assoziiert ist, (ii) eines Epoxidharzes und (iii) eines Vernetzungsmittels umfassend, vorzugsweise bestehend aus wenigstens eine/r ionische/n Flüssigkeit, die aus einem Dialkylphosphat- oder Dialkylphosphinatsalz eines organischen Kations besteht, wo die Alkylgruppe linear oder verzweigt ist und unabhängig voneinander 1 bis 12 Kohlenstoffatome umfasst;
b) Formen und Härten der folglich erhaltenen Mischung.

## Claims

1. A composite material comprising a dispersion of thermoplastic polymer and/or elastomer particles in an epoxy matrix cross-linked by at least one ionic liquid which consists of a dialkylphosphate or dialkylphosphinate salt of an organic cation, wherein the alkyl group is linear or branched and independently contains from 1 to 12 carbon atoms.

2. The material according to claim 1, **characterized in that** it contains thermoplastic polymer particles.

3. The material according to claim 1, **characterized in that** the particles have a core-shell structure whose core comprises or consists of an elastomer and whose shell comprises or consists of a thermoplastic polymer.

4. The material according to claim 1, **characterized in that** it contains elastomer nanoparticles.

5. The material according to one of claims 1 to 4, **characterized in that** it is obtainable by a process comprising the following steps:

a) mixing: (i) at least one thermoplastic polymer, at least one elastomer or one thermoplastic polymer associated with an elastomer, (ii) an epoxy resin and (iii) a cross-linking agent comprising, preferably consisting of, at least one ionic liquid consisting of a dialkylphosphate or dialkylphosphinate salt of an organic cation, wherein the alkyl group is linear or branched and independently contains from 1 to 12 carbon atoms;
(b) shaping and curing the mixture thus obtained.

6. The material according to claim 3, **characterized in that** it is obtainable by a process comprising the following steps:

a) mixing: (i) an epoxy resin, (ii) a block copolymer capable of forming a core-shell structure after solubilization in the epoxy resin and (iii) a cross-linking agent for the epoxy resin comprising, preferably consisting of, at least one ionic liquid consisting of a dialkylphosphate or dialkylphosphinate salt of an organic cation, wherein the alkyl group is linear or branched and independently contains from 1 to 12 carbon atoms.
b) shaping and curing the mixture thus obtained.

7. The material according to one of claims 1 to 6, **characterized in that** the epoxy resin is diglycidyl ether of bisphenol A (DGEBA).

8. The material according to one of claims 1 to 3, 5 or 7, **characterized in that** the thermoplastic polymer is selected from the group consisting of poly(ether sulfones), polyethylenimines, polyamides, polyamide-imides, poly(phenylene oxides) optionally grafted with methacrylate (PPO-g-MA) and mixtures thereof, preferably poly(phenylene oxides).

9. The material according to one of claims 1 to 8, **characterized in that** the cation forming the ionic liquid is selected from the group consisting of tetraalkylphosphonium, N,N-dialkylimidazolium, N-alkylpyridinium, N-dialkylpiperidinium, N-dialkylpyrrolidinium, tetraalkylammonium, pyrazolium, N-alkylthiazolium, trialkylsulfonium, trialkyltriazolium cations, and mixtures thereof, preferably tetraalkylphosphonium cations whose alkyl groups are advantageously linear and independently contain from 1 to 18 and preferably from 4 to 14 carbon atoms.

10. The material according to one of claims 1 to 9, **characterized in that** the anion forming the ionic liquid is selected from the group consisting of dialkylphosphate, dialkylphosphinate anions, and mixtures thereof, wherein the alkyl group is linear or branched and independently contains from 2 to 8 carbon atoms.

11. The material according to one of claims 1 to 10, **characterized in that** the ionic liquid is selected from the group consisting of tributyl(ethyl)phosphonium diethylphosphate (IL-DEP), trihexyl(tetradecyl)phosphonium bis-2,4,4-(trimethylpentyl)phosphinate (IL-TMP) and mixtures thereof, preferentially tributyl(ethyl)phosphonium diethylphosphate.

12. Use of the material according to one of claims 1 to 11 for the manufacture of parts or coatings useful in the aeronautics, aerospace, automotive, maritime, wind power, electronics, or sports and leisure sectors.

13. A process for manufacturing the composite material according to one of claims 1 to 11, comprising the following steps:

a) mixing (i) at least one thermoplastic polymer, at least one elastomer or one thermoplastic polymer associated with an elastomer, (ii) an epoxy resin and (iii) a cross-linking agent comprising, preferably consisting of, at least one ionic liquid consisting of a dialkylphosphate or dialkylphosphinate salt of an organic cation, wherein the alkyl group is linear or branched and independently contains from 1 to 12 carbon atoms;
(b) shaping and curing the mixture thus obtained.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2010280151 A
- US 2015252184 A
- WO 2010084939 A
- WO 2015068786 A
- WO 2015068787 A


### Littérature non-brevet citée dans la description


- A Critical Review. *Polymersfor Advanced Technologies,* 1998, vol. 9 (1), 3-10
- Development and characterization of thermosetting-thermoplastic polymer blends for applications in damage tolerant composites. *Polymer Physics,* 1988, vol. 26 (1), 65-81
- **A. MAAZOUZ et al.** *Polymer Bulletin,* 1994, vol. 33, 67-74
- **LIVI et al.** *Polymer,* 2013, vol. 54, 2123-2129